**Europäisches Patentamt**

**European Patent Office**

**Office européen des brevets**

(19)

(11) Publication number: **0 034 226**
**A1**

(12) # EUROPEAN PATENT APPLICATION

(21) Application number: **80300429.0**

(22) Date of filing: **14.02.80**

(51) Int. Cl.³: **B 60 K 31/00**

(43) Date of publication of application:
**26.08.81** Bulletin **81/34**

(84) Designated Contracting States:
**AT BE CH DE FR GB IT LU NL SE**

(71) Applicant: **DYNACRAFT MACHINE COMPANY LIMITED**
**C.D. Barfiwala Marg Andheri (West) P.O. Box 7370**
**Bombay 400 058 Maharshtra State(IN)**

(72) Inventor: **Futehally, Rashid**
**603.Nipen Co-operative Housing Soc.Ltd.Bldng.No.1**
**Juhu Bombay Maharashtra State(IN)**

(74) Representative: **Gallafent, Richard John et al,**
**GALLAFENT & CO., 8 Staple Inn**
**London WCIV 7QH.(GB)**

FIG. 2

(54) **An electromechanical coupling system for preventing a mechanical device from operating beyond preselected operating parameters or control parameters.**

(57) An electromechanical coupling system for operating a mechanical device within preselected parameters comprises a sensor means (2) which generates control pulses corresponding to the operating parameter sensed, electronic control unit (4) which is connected to the sensor means electrically and generates enabling pulses in proportion to the control pulses only when the operating or control parameter of the mechanical device is within the preselected values and a coupler means (6) locatable between a drive unit (20) and a driven unit (22) of the mechanical device for decoupling the drive unit from the driven unit when the enabling pulse is suppressed and coupling them together when the enabling pulse is present.

FIG. 1.

EP 0 034 226 A1

- 1 -

<u>An electromechanical coupling system for preventing a mechanical device from operating beyond preselected operating parameters.</u>

This invention relates to an electromechanical coupling system which prevents a mechanical device from operating beyond preselected parameters.

The expression "mechanical device" is to be understood to include any machine or mechanism in which a driven unit is coupled to and driven by a drive unit and the operating parameter may be any parameter which increases or decreases with the operation of the driven unit under the action of the drive unit; depending upon the specific type of mechanical device in question, the operating parameter may be, for instance, speed, torque, volume, pressure or temperature.

In many applications of mechanical devices, it is desirable to ensure that the drive unit is only operated in a given range of operating conditions, e.g. to prevent damage thereto. Likewise, the driven unit may also be one which should not be operated outside a certain range of operating values. An example of such a mechanical device is a road vehicle: the engine should not be run too fast, and the vehicle should not be driven too fast when heavily loaded or at all if overloaded. The present invention seeks to provide an electromechanical coupling system of use in such situations.

According to the present invention there is provided an electromechanical coupling system for operating a mechanical device including a drive unit and a driven unit within preselected operating parameters or control parameters comprising: a sensor means operatively connectable to the mechanical device for sensing changes in a control parameter or an operating parameter thereof and generating control pulses proportional to the parameter sensed; an electronic control unit comprising a control pulse monitor unit the input whereof is connected to the output of the sensor means, and a bistable logic unit connected to the output of the monitor unit for producing enabling pulses or signals corresponding to the control pulses received thereat when the mechanical device operates within the preselected operating parameters or control parameters and suppressing the enabling pulses when the mechanical device operates at or beyond the operating parameters or control parameters; and coupler means operatively connectable between the drive unit and the driven unit or the mechanical device and responsive to the enabling pulses so as to couple or decouple the drive unit from the driven unit depending upon whether the enabling pulses are present or suppressed.

Such an electromechanical coupling system can be used automatically to decouple or couple the driven unit and the drive unit by either sensing a change in an operating parameter of the mechanical device beyond its preselected values or by sensing a change in an independent parameter, hereinafter referred to as "control parameter"; the control parameter may, for instance, comprise an external load on the mechanical device, temperature or pressure.

For example, depending upon the specific machine or mechanism employed, the operating parameter to be controlled may be linear speed, angular speed, torque, momentum, pressure, temperature or volume. As an example a reciprocating machine may be considered in which a drive unit of large momentum operates a driven unit. In such a machine, the operating parameter to be sensed and controlled may be the angular speed of the driven unit or its torque. As another example, an internal combustion engine vehicle, such as a truck, may be considered; in such a vehicle, the operating parameter to be sensed and controlled may be its road speed or the operating parameter to be controlled may be road speed and the parameter to be sensed may be a control parameter such as, for example, the load on the vehicle, engine temperature or oil pressure in the gearbox or the engine.

The electromechanical system according to the invention may be constructed suitably to ensure that it is operationally reliable and tamper-proof, while still being of sturdy construction and inexpensive to manufacture and maintain. The system may if desired be arranged to generate an audible and/or visible alarm whenever the operating or control parameter reaches the preselected maximum value, and may be designed to enable its easy installation with least alterations being required to be made in an already built mechanical device.

In one embodiment, the coupler means may be a magnetic coupler comprising a cylindrical electromagnet, solenoid windings whereof are connected to the electronic control unit so as to receive the enabling pulses, the electromagnet being rigidly located at one end of a non-magnetic cylindrical casing and on its outside being rigidly connectable to one of the driven unit and drive unit; a spring-loaded moveable piston pole made of a magnetic material and disposed within the cylindrical casing and opposite the electromagnet with the free end thereof remote from the electromagnet extending outside the cylindrical casing through a piston rod guide and rigidly connectable to the drive unit if the electro magnet is connectable to the driven unit and to the drive unit if the electromagnet is connectable to the drive unit.

In another embodiment, the coupler means may be a magnetic rotary clutch comprising a cylindrical non-magnetic cover cum disc guide rotatably connectable to one of the driven unit and drive unit by a radial arm; a cylindrical electromagnet rigidly attached to the cover cum disc guide so as to rotate therewith and disposed spaced therefrom so as to define a hollow space between the poles of the electromagnet and the cover cum disc guide, solenoid windings of the electromagnet being connected to the electronic control unit so as to receive the enabling pulses; a magnetic material pole disc rigidly mounted in the hollow space and opposite the poles of the electromagnet on an axial shaft running through an aperture in the cover cum disc guide, the axial shaft being rotatably connectable to the drive unit if the radial arm is connectable to the drive unit and to the driven unit if the radial arm is connectable to the drive unit, so that the pole disc can rotate about an axis common to the electromagnet and the pole disc if either the drive unit or the driven unit operates; and a plurality of depressions in the oppositely disposed faces of the pole disc and the poles of the electromagnet, each depression in the pole disc carrying a steel ball which in one instance, when the electromagnet is energised in the presence of enabling pulses and pulls the disc pole to press thereagainst, engagingly registers with a depression in the poles of the electromagnet so that the pole disc and the electromagnet act as one body, and which in another instance, when the electromagnet is not energised in the absence of enabling pulses and the disc pole is not pressed thereagainst rolls freely against the face of the poles of the electromagnet so that the pole disc and the electromagnet act independently of each other.

In yet another embodiment, the coupler means may comprise a fluid pressure acutated master cylinder having a piston which is spring-loaded and connectable to one of the drive unit and driven unit; a fluid pressure actuated slave cylinder having a piston which is spring-loaded and connectable to the driven unit or to the drive unit respectively; the pressure spaces of the master cylinder and the slave cylinder being connected to each other through a pressure pipe and to a fluid reservoir through a connecting pipe fitted with an OPEN-CLOSE valve and through a return flow pipe fitted with a one-way valve which one-way valve permits fluid flow from the reservoir into the pressure spaces; and an actuating device for operating the OPEN-CLOSE valve, the actuating device being operatively connected to the electronic control unit so that under the action of the enabling pulses it opens and closes the OPEN-CLOSE valve.

Preferably the piston of the master cylinder is loaded such that in the absence of an external force the piston retracts to a position at which the volume of the pressure space is maximum, and the piston of the slave cylinder is also spring-loaded such that in the absence of an external force the piston retracts to a position at which the volume of the pressure space is minimum.

In another embodiment, the coupler means may comprise a fluid pressure actuated cylinder the piston whereof is connectable to one of the drive unit and the driven unit and the cylinder casing whereof is connectable to the driven unit or to the drive unit respectively, at least one of the piston and cylinder casing being a spring-loaded; the pressure space of the cylinder being connected to a fluid reservoir through a connecting pipe fitted with an OPEN-CLOSE valve and through a return flow pipe fitted with a one-way valve which permits fluid to flow only from the reservoir to the pressure space; and an actuating device for operating the OPEN-CLOSE valve, the actuating device being operatively connected to the electronic control unit so that under the action of the enabling pulses it opens or closes the OPEN-CLOSE valave.

The system of the invention is of particular value when the mechanical device is an internal combustion engined vehicle, the drive unit being the accelerator pedal and the driven unit being a throttle lever or an injector pump control lever. In such a case, by employing the electromechanical coupling system according to the invention, it is possible to achieve various different objectives, such as to prevent over-speeding of the vehicle and to prevent its movement if it is overloaded or if the engine is over-heated or if the oil pressure in the engine or the gearbox differs from a desired value.

Thus, where it is desired to prevent over-speeding, the operating parameter and the control parameter may be the road speed of the vehicle itself i.e. the road speed may be sensed and controlled, and the sensor means may be a speed sensor adapted to be coupled to any rotating member of the vehicle the rotational speed of the which is proportional to the road speed. The control pulse monitor unit may be a conventional frequency monitor unit. According to one embodiment, the speed sensor may comprise a light source and a photosensitive diode and a rotatable shaft carrying an interrupter arm adapted to interrupt a light beam from the light source to the diode. The rotatable shaft is coupled to the rotating member of the vehicle, and the output from the photosensitive diode is connected to the control pulse monitor unit. Alternatively, the speed sensor may comprise a magnetic yoke pole carrying an input winding which remains continuously energised and an output winding connected to the electronic control unit, the rotatable shaft carrying a slotted disc the teeth whereof match the yoke ends of the yoke pole.

In another application of the invention, where it is desired to prevent a vehicle from moving, even though the engine may be running, if the vehicle is overloaded, the operating parameter to be controlled may be the road speed of the vehicle and the control parameter to be sensed may be the load on the vehicle; the sensor means may be a conventional over-load sensor located on the vehicle such that it can sense that the vehicle is over-loaded and generate corresponding control pulses. The pulse monitor unit may be a conventional frequency monitor unit.

Likewise if it is desired to prevent the vehicle from moving, even though the engine is running, if the engine temperature is different from an acceptable value, the operating parameter to be controlled may be the road speed of the vehicle and the control parameter to be sensed may be the engine temperature; the sensor means may be a conventional temperature sensor that can sense the engine temperature and generate corresponding control pulses and the pulse monitor unit may be a conventional frequency monitor unit.

Again, if it is desired to prevent the vehicle from moving, even though the engine may be running, if the engine or gearbox oil pressure is different from normal, the operating parameter to be controlled may be the road speed of the vehicle and the control parameter to be sensed may be the oil pressure; the sensor means may be conventional fluid pressure sensing device which generates corresponding control pulses and the pulse monitor unit may be a conventional frequency monitor unit.

Embodiments of the invention will now be described, by way of example, with particular reference to an internal combustion engined vehicle such as a truck. In the accompanying drawings:

Figure 1 shows a diagrammatic layout and arrangement of an electromechanical coupling system according to the invention fitted to a truck;

Figure 2 shows a conventional arrangement for coupling the accelerator pedal to the throttle lever;

Figures 3A and 3B respectively show an end view and a side view of an embodiment of the sensor shown in Figure 1;

Figures 4A and 4B respectively show an end view and a side view of another embodiment of the sensor;

Figure 5 shows a block diagram of the electronic control unit shown in Figure 1;

Figure 6 shows an embodiment of the electronic control unit shown in Figures 1 and 5;

Figure 7 shows another embodiment of the electronic control unit;

Figure 8 shows an embodiment of the coupler shown in Figure 1;

Figure 9 shows another embodiment of the coupler;

Figure 10 shows yet another embodiment of the coupler; and

Figure 11 shows a further embodiment of the coupler.

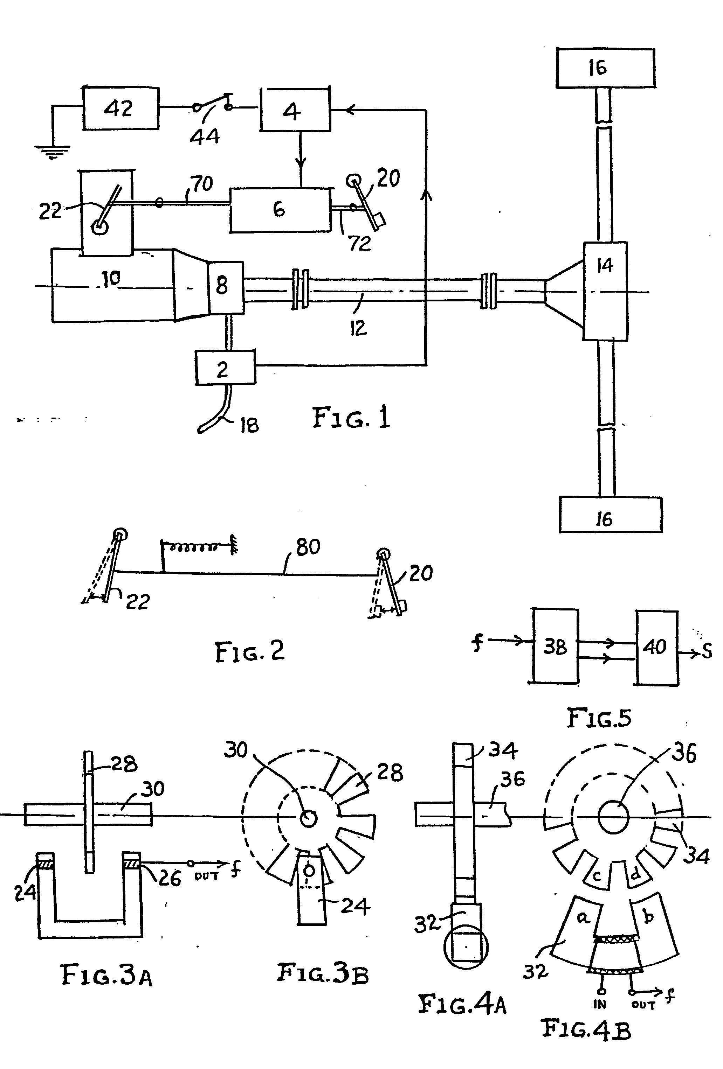

Referring to Figure 1, the electromechanical coupling system consists of a sensor 2, which senses the operating parameter to be controlled or the control parameter and generates control pulses; an electronic control unit 4 connected to the output of the sensor

to receive the control pulses, and as described hereinbelow, to generate enabling pulses under the action of
the control pulses when the operating parameter or the
control parameter is within a preselected range and
suppress the enabling pulses when the operating
parameter or the control parameter equals or exceeds
the preselected value; and a coupler 6 which is actuated
by the enabling pulses. These three means 2, 4, 6 in
combination comprise the entire coupling system.

As shown, the sensor is a speed sensor 2 fitted on
the gearbox 8 of the vehicle of which the engine 10,
propeller shaft 12, differential 14, wheels 16, speedometer cable 18, accelerator pedal 10 and throttle lever
22 only are shown. The speed sensor's function is to
generate a control pulse which is proportional to the
vehicle speed. Two embodiments of the speed sensor
which can perform such function are shown in Figures 3A,
3B and Figures 4A,4B. The speed sensor shown in Figures
3A, 3B consists of a light source 24, a photosensitive
diode 26 and an interrupter arm 28 mounted on a
rotatable shaft 30 and disposed so as to interrupt
intermittently the light beam reaching the photosensitive diode 26 from the light source 24; the rotatable shaft is coupled to the gearbox to revolve at an
angular speed proportional to the road speed. The
action of the interrupter arm therefore produces a
control pulse of a frequency (f) which is proportional
to the vehicle speed.

The speed sensor shown in Figures 4A, 4B is based on
magnetic induction coupling and has a magnetic yoke 32,
the yoke ends of which match the teeth in a slotted disc
34 mounted on a rotatable shaft 36. The yoke pole 32
carries an input winding 36a and an output winding 36b
of which the input winding is kept continuously
energised. The shaft 36 is coupled to a gearbox as in
the earlier embodiment shown in Figures 3A, 3B; the slotted disc 34 therefore rotates at an angular speed proportional to the vehicle speed and causes its teeth alternately to match and mismatch with the yoke pole ends. The rise and fall in the magnetic flux passing through the curcuit $\underline{a}$-$\underline{c}$-$\underline{d}$-$\underline{b}$-$\underline{a}$ generates a pulsed current (control pulse) at the output coil 36$\underline{b}$ of a frequency (f) which is proportional to the vehicle speed.

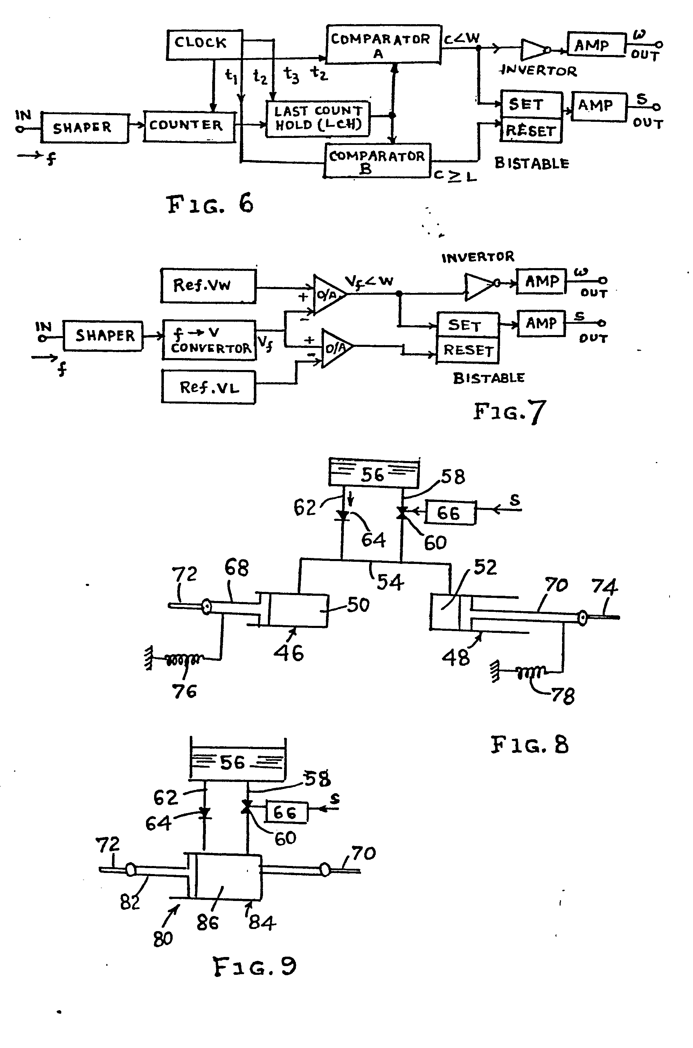

The electronic control unit which receives the control pulses receives its power supply from the vehicle's electrical system such as battery 42 to which it is connected through a switch 44 (Figure 1). Referring to Figure 5,the electronic control unit essentially consists of a conventional frequency monitor unit 38, which serves to monitor the control frequency (f) and a bistable logic unit 40 which generates enabling pulses for controlling the operation of the coupler means 6 (Figure 1). In other words, if

L = limit speed of the vehicle

W = vehicle speed close to the limit speed (W$\angle$L)

f = control pulse frequency

then the electronic control unit 4 :

- generates audio/visual warning signal (w) when the control pulse frequency corresponds to a vehicle speed greater than or equal to W

- generates an enabling signal or pulse (S=1) when f corresponds to a speed less than L

- suppresses enabling pulses (S=0) when f corresponds to a speed which is greater than or equal to·L

To understand the abovementioned generation of appropriate pulses and the performance of the electronic control unit 4, reference may be made to the two embodiments thereof shown in Figures 6 and 7. In the embodiment shown in Figure 6, the electronic control unit is a digital logic circuit comprising a SHAPER which converts the control pulses (f) into pulses of shape/size compatible with the rest of the circuit; a CLOCK which produces steady signal pulses at fixed time intervals t1, t2, t3; a COUNTER which counts the number of incoming pulses (f) in the period t1 to t1; a LAST COUNT HOLD (LCH) which receives the count from the COUNTER at time t1 and holds it till time t3 such that during time t1 to t3 the count is available to two COMPARATORS A and B, and at time t3 rests to zero. The COMPARATOR A compares the count in the LCH to W at time t2 and if the count is less than W, produces a steady signal $c < W$, whereas the COMPARATOR B compares the count in the LCH to L and if the count is more than L, produces a steady signal $c \not> L$. The circuit also includes a bistable unit which operates in two states, SET and RESET, and remains in one state until triggered to change by the control pulse $c < W$ or $c > W$; an INVERTER which inverts the signal c; and amplifiers (AMP) which amplify the signals to appropriate value for driving output devices such as the audio/visual device and the coupler.

During operation, the control pulses (f) are received and shaped in the SHAPER; the shaped signals are then counted in the COUNTER within the time period t1 to t1 (which may be 1 second for instance). The number of pulses within this period i.e. the count, are immediately transferred to the LCH at time t1 and a new count started in the COUNTER. At time t2 this is compared in the two comparators A and B against preselected values of W and L. The comparison to W produces a signal c when the count is less than W (i.e indicating that the vehicle speed is less than warning speed). This causes the bistable unit to go to SET state and give an output (enabling pulses) which after amplification in the amplifier AMP serves to drive the coupler 6 i.e. at all speeds below W the bistable is held to SET. When the vehicle speed exceeds W, this signal disappears, which causes the audio/visual signal w to appear through the INVERTER and the corresponding amplifier AMP. The comparison to L produces a signal when $c \not\parallel L$ (i.e. when vehicle speed is equal to or exceeds L). This signal resets the bistable unit, cutting off the enabling signals or pulses (S=0). When the vehicle begins to decelerate, first the signal $c \gg L$ disappears and the signal $c < W$ appears; this signal causes the bistable to move into SET state and the enabling signal reappears (S=1).

In the embodiment shown in Figure 7 the electronic control unit 4 is a digital cum analog circuit comprising a SHAPER, BISTABLE, INVERTER and amplifier AMP as in Figure 6 and in addition has a $f \rightarrow V$ convertor which converts the shaped input control frequency (f) into a voltage value V proportional thereto; Ref $V_W$ and Ref $V_L$ units which generate a steady fixed voltage level corresponding to the value produced by the $f \rightarrow V$ convertor when f corresponds to speeds W and L respectively; and operational amplifiers (O/A) having two inputs (+) and (-), and, being analog devices, having the characteristics that they produce an output when (+) input is greater than (-) input and zero output when (+) input $\nleq$ (-) input.

In operation, the bistable is held in SET mode at all times while $V_f < V_W$ (i.e. vehicle speed is below warning speed), When $V_f \gg V_W$, warning signal w appears and the SET signal removed from the bistable. When $V_f$ L (i.e vehicle speed $\gg$ limit speed), the bistable is RESET, removing enabling signal or pulse from the coupler means (S=0). When vehicle speed reduces below warning speed then $V_f < V_W$ and the bistable moves into the SET mode again, thereby generating enabling signal (S=1) once again for operating the coupler means.

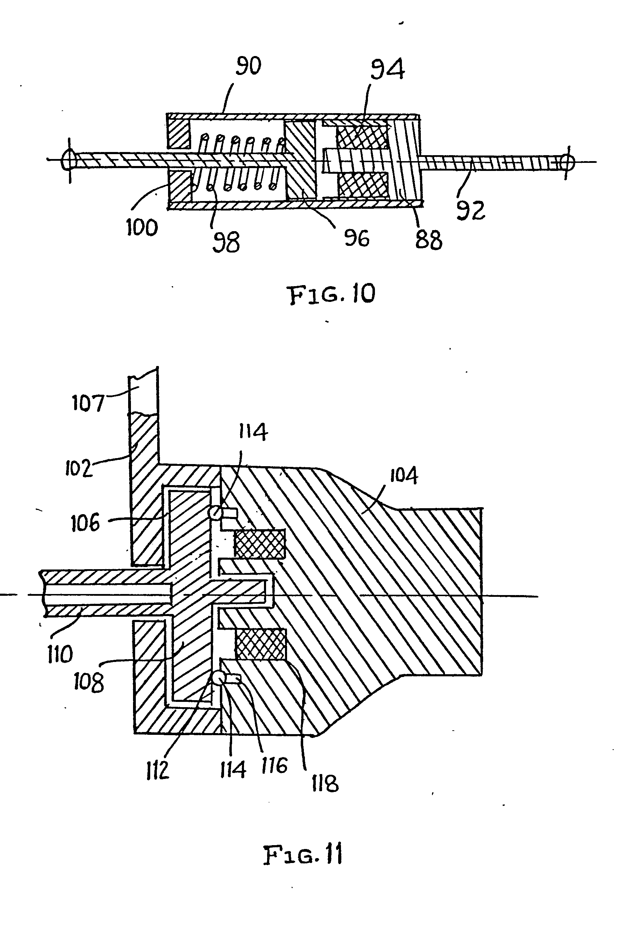

Different embodiments of the coupler 6, to which the output from the electronic control unit goes, are illustrated in Figures 8 to 11. In the embodiment shown in Figure 8, the coupler consists of a fluid pressure actuated master cylinder 46, a fluid pressure actuated slave cylinder 48 with their pressure spaces 50 and 52, respectively connected to each other through a pressure pipe 54 and to a fluid reservoir 56 through a connecting pipe 58 fitted with an OPEN-CLOSE valve 60 and through a return flow pipe 62 fitted with a one-way valve 64 which valve permits the flow of the fluid from the reservoir to the pressure spaces only. The OPEN-CLOSE valve 60 is electrically operated by a solenoid 66 (actuating device) which is actuated by the enabling pulses. The piston 68 of the master cylinder and the piston 70 of the slave cylinder are connected respectively through link rods 72 and 74 to the accelerator pedal 20 (drive unit) and the throttle lever 22 (driven unit) as shown in Figure 1 (or an injector pump control lever in the case of a Diesel engine vehicle). The piston 68 of the master cylinder 46 is tensioned by springs 76 so as to maximise the volume of the pressure space 50 and the piston 70 of the slave cylinder is tensioned by springs 78 so as to minimise the volume of the pressure space 52; also, the pistons 68, 70 are so connected to the accelerator pedal and the throttle lever respectively as to ensure that their "rest" position under the action of the respective springs corresponds to the "idle" positions of the pedal and the throttle lever. The reservoir and the fluid spaces may be filled with hydraulic or pneumatic fluid.

As described hereinbelow, the electronic control unit generates enabling pulses (S=1) only so long as the vehicle speed does not equal or exceed the limit speed L and suppresses such pulses (S=0) when the vehicle . speed equals or exceeds the limit speed L. In the first instance, the enabling signals cause the solenoid 66 to close the OPEN-CLOSE valve 60. In such condition, when the pedal 20 is pressed ("increase" speed stroke), the pressure space in the master cylinder 46 is reduced and because of fluid transfer from the pressure space .50 to the pressure space 52 through pressure pipe 54, connecting pipe being closed, the throttle lever 22 is moved to open the throttle. On the other hand, if the pedal is released ("reduced" speed stroke) the fluid is transferred back from the pressure space 52 to the pressure space 50 and the throttle lever moves back to close the throttle. The pedal 20 and the throttle lever 22 are thus operatively coupled so long as the OPEN-CLOSE valve 60 remains closed and the coupler 6 acts in the same manner as the rigid link rod 80 provided conventionally between the accelerator pedal and the throttle lever as shown in Figure 2. In the second instance, when the vehicle speed equals or exceeds the limit speed L, the speed sensor generates a control frequency (f) which exceeds the frequency corresponding to the limit speed L and the electronic control unit 4 cuts off the enabling pulses (S=0) as described hereinbefore. This results in the opening of the OPEN-CLOSE valve 60 and therefore the transfer of the fluid from the pressure space 50 to the fluid reservoir 56 and not into the pressure space 52, when the accelerator pedal is pressed, and the throttle lever does not operate. In other words, the pedal and the throttle lever are decoupled. The vehicle therefore loses speed until it drops below the limit speed and the enabling signals are once again generated. In the intermediate period, when the vehicle is losing speed, the fluid in the reservoir 56 returns to the pressure spaces 50 and 52 through the one-way valve 64.

Similar control is obtained from the coupler means shown in Figure 9. It employs a single cylinder 80 with the piston 82 connected to the pedal 20 and with the casing 84 connected to the throttle lever 22 through link rods 70 and 72 respectively. The fluid space 86 is connected to the fluid reservoir 56 by the connecting pipe 58 provided with an OPEN-CLOSE valve 60, operated by a solenoid 66, and a return flow pipe 62 provided with a one-way valve 64 which valve permits flow of fluid from the reservoir to the pressure space only. So long as the solenoid operated OPEN-CLOSE valve 60 remains closed under the influence of the enabling signals, the pressure applied to the pedal causes the compression of the fluid space 86, which compression operates on the casing and moves it to operate the throttle lever 22; the pedal and the throttle lever thus remain coupled. In the other instance when the limit speed is equalled or exceeded, the enabling signals are suppressed and the OPEN-CLOSE valve opens; this results in the fluid being transferred from the pressure space 86 to the reservoir 56 and hence decoupling of the pedal from the throttle lever as in the earlier embodiment shown in Figure 8.

The embodiment of the coupler means shown in Figure 10 is a magnetic coupler consisting of a cylindrical electromagnet 88 fixed inside and at one end of a cylindrical non-magnetic casing 90; on its outside the electromagnet is connected to the throttle lever 22 by a rigid rod member 92, while its solenoid winding 94 is connected to the electronic control unit 4 (Figure 1) for receiving the enabling pulses. Disposed opposite the electromagnet and adapted to move axially within the casing 90 is a spring-loaded piston pole 96 (springs are designated 98) made of magnetic material; the piston pole extends without the casing through a piston rod guide 100 and is connected to the accelerator pedal 20. In operation, the enabling pulses flowing through the solenoid windings 94 energise the electromagnet which attracts the piston pole and therewith acts as one body; when therefore the pedal is pressed, action is transmitted to the throttle lever via the electromagnet and the piston pole, and the magnetic coupler acts in the same manner as the rigid link rod 80 provided conventionally between the accelerator pedal and the throttle lever (see Figure 2) and like the link rod 80 may act in the "tension" mode, as illustrated in Figure 2, when the pedal is pressed to open the throttle of with obvious modifications in the "compression" mode. On the other hand, when the enabling pulses are suppressed (S=0), the action of the pedal is not transmitted to the throttle lever since the piston pole and the electromagnet act independently of each other. The pedal and the throttle lever are therefore decoupled when the vehicle speed equals or exceed the limit speed L and coupled together so long as the vehicle speed is below the limit speed L.

The embodiment of the coupler means shown in Figure 11 is a magnetic rotary clutch comprising a cylindrical non-magnetic cover cum disc guide 102, a cylindrical electromagnet 102, a cylindrical electromagnet 104 attached rigidly to said cover cum disc guide 102 and disposed in spaced-apart relationship therewith so as to define a hollow space 106 between the poles 108 of the electromagnet 104 and the cover cum disc guide 102 and the magnetic material pole disc 108 rigidly mounted in the hollow space 106 on an axial shaft 110 extending without the hollow space through an aperture in the cover cum disc guide 102; in effect, the pole disc is located opposite the poles of the electromagnet. A plurality of depressions is provided in the oppositely-disposed faces of the pole disc and the poles of the electromagnet; the depressions 112 in the pole disc are concave depressions deep enough to carry a plurality of steel balls 114 which abut the face of the poles of the electromagnet and roll thereagainst in one instance or register with the small diameter apertures 116 in the poles of the electromagnet in another instance as explained hereinbelow. The solenoid winding 118 of the electromagnet 104 is connected to the output of the electronic control unit for receiving the enabling pulses. The cover cum disc guide 106 is connected to the throttle lever through a radial lever 107 in any known manner such that when the electromagnet turns or rotates about an axis common to it and the pole disc 108 the throttle is moved linearly; similarly the pole disc and the axial shaft 110 are connected to the accelerator pedal in such known manner that when the pedal is pressed, the pole disc rotates about the common axis. Being known, the actual mode of connection of the radial arm 107 to the throttle lever and of the axial shaft to the pedal are omitted in the drawings.

In operation, when the vehicle speed is less than the limit speed L, enabling pulses energise the solenoid windings of the electromagnet and this causes the electromagnet 104 to pull the pole disc 108 towards itself such that the steel balls 114 carried in the depressions 112 roll into corresponding depressions in the poles of the electromagnet when the pedal is pressed and the pole disc made to rotate. Since the balls 114 are held in the depressions 116 under pressure, the electromagnet also rotates with the disc pole 108; in other words, the pedal and the throttle lever are coupled together and any movement of the pedal causes the throttle lever to move likewise and operate the throttle. When the vehicle speed equals or exeeds the limit speed L, the enabling signals are cut off and the electromagnet is de-energised; this results in the pressure of the pole disc against the electromagnet to disappear. In such a case, if the pedal is pressed, the steel balls merely travel across the face of the pole of the electromagnet (since the depressions 116 are too narrow to trap the ball) and the pole disc rotates without rotating the electromagnet; in other words, the pedal and the throttle lever are effectively decoupled and any movement of the pedal does not increase the speed of the vehicle. The vehicle thus loses speed till the vehicle speed falls below the limit speed and the enabling signals appear once again and the pedal is once again coupled to the throttle lever.

The aforesaid embodiment describes the construction and the operation of the electromechanical coupling system for a case where it is desired to prevent over-speeding. By using suitable known sensors, such as a load sensor, temperature sensor or a pressure sensor, the system would function in an identical manner as in the embodiments described above and prevent movement of the vehicle even if the engine is running, if the vehicle is overloaded or the engine temperature or pressure of the oil in the engine or the gearbox is different from a preselected value. Similar functions are possible to obtain in the case of such mechanical devices, other than an IC engine considered in the embodiments described above, where a driven device is required to be operated by the action of a drive unit through some intermediate coupling means.

## CLAIMS

1.  An electromechanical coupling system for operating a mechanical device including a drive unit and a driven unit within preselected operating parameters or control parameters comprising: a sensor means (2) operatively connectable to the mechanical device for sensing changes in a control parameter or an operating parameter thereof and generating control pulses proportional to the parameter sensed; an electronic control unit (4) comprising a control pulse monitor unit the input whereof is connected to the output of the sensor means, and a bistable logic unit connected to the output of the monitor unit for producing enabling pulses or signals corresponding to the control pulses received thereat when the mechanical device operates within the preselected operating parameters or control parameters and suppressing the enabling pulses when the mechanical device operates at or beyond the operating parameters or control parameters; and coupler means (6) operatively connectable between the drive unit and the driven unit of the mechanical device and responsive to the enabling pulses so as to couple or decouple the drive unit from the driven unit depending upon whether the enabling pulses are present or suppressed.

2.  A system according to claim 1, wherein the coupler means is a magnetic coupler comprising a cylindrical electromagnet (88), solenoid windings whereof are connected to the electronic control unit (4) so as to receive the enabling pulses, the electromagnet being rigidly located at one end of a non-magnetic cylindrical casing (90) and on its outside being rigidly connectable to one of the driven unit and drive unit; a spring-loaded moveable piston pole (96) made of a magnetic material and disposed with the cylindrical casing and opposite the electromagnet with the free end thereof remote from the electromagnet extending outside the cylindrical casing through a piston rod guide rigidly connectable to the drive unit if the electromagnet is connectable to the driven unit and to the driven unit if the electromagnet is connectable to the drive unit.

3. A system according to claim 1 wherein the coupler means is a magnetic rotary clutch comprising a cylindrical non-magnetic cover cum disc guide (102) rotatably connectable to one of the driven unit and drive unit by a radial arm; a cylindrical electromagnet (104) rigidly attached to the cover cum disc guide (102) so as to rotate therewith and disposed spaced therefrom so as to define a hollow space (106) between the poles of the electromagnet and the cover cum disc guide, solenoid windings of the electromagnet being connected to the electronic control unit so as to receive the enabling pulses; a magnet material pole disc (108) rigidly mounted in the hollow space and opposite the poles of the electromagnet on an axial shaft (110) running through an aperture in the cover cum disc guide, the axial shaft being rotatably connectable to the drive unit if the radial arm is connectable to the driven unit and to the driven unit if the radial arm is connectable to the drive unit, so that the pole disc (108) can rotate about an axis common to the electromagnet and the pole disc if either the drive unit or the driven unit operates; and a plurality of depressions (112) in the oppositely disposed faces of the pole disc and the poles of the electromagnet, each depression in the pole disc carrying a steel ball (114) which in one instance, when the electromagnet is energised in the presence of enabling pulses and pulls the disc pole to press thereagainst, engagingly registers with a depression in the poles of the electromagnet so that the pole disc and the electromagnet act as one body, and which in another instance, when the electromagnet is not energised in the absence of enabling pulses and the disc pole is not pressed thereagainst rolls freely against the face of the poles of the electromagnet so that the pole disc and the electromagnet act independently of each other.

4. A system according to claim 1 wherein the coupler means comprises: a fluid pressure actuated master cylinder (46) having a piston (68) which is spring-loaded (76) and connectable to one of the drive unit and driven unit; a fluid pressure actuated slave cylinder (48) having a piston (70) which is pring-loaded (78) and connectable to the driven unit or to the drive unit respectively; the pressure spaces (50,52) of the master cylinder and the slave cylinder being connected to each other through a pressure pipe (54) and to a fluid reservoir (56) through a connecting pipe (58) fitted with an OPEN-CLOSE valve (60) and through a return flow pipe (62) fitted with a one-way valve (64) which one-way valve permits fluid flow from the reservoir into the pressure spaces; and an actuating device (66) for operating the OPEN-CLOSE valve, the actuating device being operatively connected to the electronic control unit so that under the action of the enabling pulses it opens and closes the OPEN-CLOSE valve.

5. A system according to claim 4, wherein the piston (68) of the master cylinder (46) is spring-loaded such that in the absence of an external force the piston retracts to a position at which the volume of the pressure space (50) is maximum and wherein the piston (70) of the slave cylinder (48) is spring-loaded such that in the absence of an external force the piston retracts to a position at which the volume of the pressure space (52) is minimum.

6. A system according to claim 1, wherein the coupler means comprises: a fluid pressure actuated cylinder (180) the piston whereof is connectable to one of the drive unit and the driven unit and the cylinder casing (84) whereof is connectable to the driven unit or to the drive unit respectively, at least one of the piston and cylinder casing being spring-loaded; the pressure space (86) of the cylinder being connected to a fluid reservoir (56) through a connecting pipe (58) fitted with an OPEN-CLOSE valve (60) and through a return flow pipe (62) fitted with a one-way valve (64) which permits fluid flow only from the reservoir to the pressure space; and an actuating device (66) for operating the OPEN-CLOSE valve, the actuating device being operatively connected to the electronic control unit so that under the action of the enabling pulses it opens or closes the OPEN-CLOSE valve.

7. A system according to any one of the preceding claims, in which the mechanical device is an internal combustion engined vehicle, the drive unit is an accelerator pedal (20) and the driven unit is a throttle lever (22) or an injector pump control lever.

8. A system according to claim 7, in which the operating parameter to be sensed and controlled is the road speed of the vehicle and in which the sensor means is a speed sensor adapted to be coupled to any rotating member of the vehicle the rotational speed of which is proportional to the road speed, and the control pulse monitor unit is a conventional frequency monitor unit.

9. A system according to claim 8, in which the speed sensor comprises a light source (24) and photosensitive diode (26) and a rotatable shaft (30) carrying an interrupter arm (28) adapted to interrupt a light beam from the light source to the photosensitive diode, the rotatable shaft being coupled to any rotating member of the vehicle the rotational speed of which is proportional to the road speed and the output from the photosensitive diode being connected to the pulse monitor unit.

10. A system according to claim 8, in which the speed sensor comprises a magnetic yoke pole (32) carrying an input winding which remains continuously energised and an output winding connectable to the electronic control unit, a rotatable shaft (36) carrying a slotted disc (34) the teeth whereof match the yoke ends of the yoke pole, the rotatable shaft being coupled to any rotating member of the vehicle the rotational speed of which is proportional to the road speed.

11. A system according to claim 7, wherein the operating parameter to be controlled is the road speed of the vehicle and the control parameter to be sensed is the load on the vehicle; the sensor means is a conventional over-load sensor located on the vehicle such that it can sense that the vehicle is over-loaded and generate corresponding control pulses; and the pulse monitor unit is a conventional frequency monitor unit.

12. A system according to claim 7, wherein the operating parameter to be controlled is the road speed of the vehicle and the control parameter to be sensed is the engine temperature; the sensor means is a conventional temperature sensor that can sense the engine temperature and generate corresponding control pulses; and the pulse monitor unit is a conventional frequency monitor unit.

13. A system according to claim 7, in which the operating parameter to be controlled is the road speed of the vehicle and the control parameter to be sensed is the oil pressure in the engine; the sensor means is a conventional fluid pressure sensing device connectable to the engine of the vehicle so as to sense the oil pressure and generate corresponding control pulses; and the pulse monitor unit is a conventional frequency monitor unit.

0034226

FIG. 1

FIG. 2

FIG. 3A

FIG. 3B

FIG. 4A

FIG. 4B

FIG. 5

FIG. 6

FIG.7

FIG. 8

FIG.9

FIG. 10

FIG. 11

European Patent Office

**EUROPEAN SEARCH REPORT**

EP 80 30 0429

| Category | Citation of document with indication, where appropriate, of relevant passages | Relevant to claim | CLASSIFICATION OF THE APPLICATION (Int. Cl. 3) |
|---|---|---|---|
| | US - A - 3 520 380 (FORDMOTOR COMP.)<br>* Column 4, line 10 to column 6, line 18; figures 3,4 * | 1,2,7,8 | B 60 K 31/00 |
| | FR - A - 2 419 835 (L.F. TOULOUSE)<br>* Page 2, line 5 to page 3, line 21; figures 1-3 * | 1,7,8 | |
| | DE - A - 2 330 939 (D. WALDMANN)<br>* Page 5, line 7 to page 7, line 2; figures 1-4 * | 1,7,8 | **TECHNICAL FIELDS SEARCHED (Int.Cl. 3)**<br>B 60 K 31/00<br>41/02 |
| | FR - A - 2 362 436 (ROBERT BOSCH GmbH)<br>* Page 2, line 35 to page 3, line 34; figure 2 * | 3 | |
| | US - A - 3 767 972 (ASSOCIATED ENGINEERING LTD.)<br>* Column 6, lines 9-46; figure 5 * | 1,6-8 | |
| | DE - A - 2 142 120 (J. WERNICKE)<br>* Page 6, lines 4-18; figure 3 * | 10 | **CATEGORY OF CITED DOCUMENTS**<br>X: particularly relevant<br>A: technological background<br>O: non-written disclosure<br>P: intermediate document<br>T: theory or principle underlying the invention<br>E: conflicting application |
| A | FR - A - 2 309 365 (J. HEMMERT)<br>* Page 2, line 38 to page 3, line 3; figures 1,2 * | 1 | D: document cited in the application<br>L: citation for other reasons |
| | ./. | | &: member of the same patent family, corresponding document |

**DOCUMENTS CONSIDERED TO BE RELEVANT**

The present search report has been drawn up for all claims

| Place of search | Date of completion of the search | Examiner |
|---|---|---|
| The Hague | 01-10-1980 | WEIHS |

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | FR - A - 2 139 323 (L.R. CARON)<br><br>* Page 4, lines 2-22; figure 3 *<br><br>-- | 1 | |
| A | FR - A - 2 332 426 (DAIMLER-BENZ AG)<br><br>* Page 1, lines 1-38; figures *<br><br>----- | 1 | |
| | | | TECHNICAL FIELDS SEARCHED (Int. Cl. 3) |

EPO Form 1503.2    06.78